# EUROPEAN PATENT SPECIFICATION

(11) **EP 2 117 177 B1**
(45) Date of publication and mention of the grant of the patent: **10.10.2012**
(21) Application number: 08715386.2
(22) Date of filing: 01.04.2008
(51) Int. Cl.: H04L 12/46

(54) **METHOD FOR CONTROLLING CALL, CIRCUIT SWITCHED DOMAIN ADAPTER AND TERMINAL DEVICE**
VERFAHREN ZUR ANRUFKONTROLLE, CIRCUITGESCHALTETER DOMÄNADAPTER UND ENDGERÄT
PROCÉDÉ DE COMMANDE D'APPEL, ADAPTATEUR DE DOMAINE À COMMUTATION DE CIRCUITS ET DISPOSITIF TERMINAL

(30) Priority: 06.04.2007 CN 200710090412
(43) Date of publication of application: 11.11.2009
(73) Proprietor: Huawei Technologies Co., Ltd., Longgang District, Shenzhen Guangdong 518129 (CN)
(72) Inventor: LONG, Shuiping, Shenzhen Guangdong 518129 (CN)
(74) Representative: Thun, Clemens
(86) International application number: PCT/CN2008/070654
(87) International publication number: WO 2008/122235

(56) References cited:
- CN-A- 1 751 493
- CN-A- 1 816 022
- CN-C- 1 297 124
- US-A1- 2004 190 498
- "Digital cellular telecommunications system (Phase 2+); Universal Mobile Telecommunications System (UMTS); Combining Circuit Switched (CS) and IP Multimedia Subsystem (IMS) services; Stage 2 (3GPP TS 23.279 version 7.6.0 Release 7); ETSI TS 123 279" ETSI STANDARDS, LIS, SOPHIA ANTIPOLIS CEDEX, FRANCE, vol. 3-SA2, no. V7.6.0, 1 March 2007 (2007-03-01), XP014037769 ISSN: 0000-0001
- "3rd Generation Partnership Project; Technical Specification Group Services and System Aspects; Voice Call Continuity between CS and IMS Study (Release 7)", 3GPP STANDARD; 3GPP TR 23.806, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.0.0, 1 December 2005 (2005-12-01), pages 1-153, XP050363756,

## Description

### FIELD OF THE INVENTION

The present invention relates to communication technique field, and particularly to a call control method, a circuit-switched domain adapter and a terminal device.

### BACKGROUND

At present, mobile communication networks are mostly circuit-switched (CS) networks, which include Global System for Mobile Communications (GSM), Code Division Multiple Access (CDMA) and so on. Operators have built up relatively complete and rich service platforms based on the CS networks in which Mobile Switching Center (MSC) is responsible for call routing and service logic executing, such as call forwarding service, call hold service and so on.

Service provision in a CS network needs to be supported by a MSC in a roaming region, which is inconvenient for introducing new services. IP Multimedia Sub-system (IMS) is a packet-switched (PS) service network in which service provision is independent from a roaming region, which facilitates to introduce new multimedia services. The IMS supports a User End (UE) to obtain PS IMS multimedia services through various PS access networks.

The PS IMS network is a trend for the development of future communication networks. However, the IMS network is also a relatively complex network. It can be foreseen that thorough deployment of the PS IMS network will not be completed in a short time, and meanwhile not all CS network users could employ new IMS terminals in a short time. Therefore the CS networks will coexist with the IMS networks in a long time, and thus it is needed to operate the CS networks and the IMS networks simultaneously.

An existing technique for implementing coexistence of networks realizes the interworking between the CS networks and the IMS networks through specific network interfaces. For example, Media Gateway Controller (MGC) is introduced for converting different call protocols of two networks. The MGC is a logic functional entity for realizing Media Gateway Control Function (MGCF).

US 2004/190498 A1 discloses a method for enabling interworking between an IP-based network and a circuit-switched network is provided. The method includes the steps of: forwarding a first address information of a first connection end located in the circuit-switched network in a trigger message routed from the IP-based network to a gateway control function; establishing a first call leg towards the first connection end based on the first address information; establishing a second call leg towards a second connection end located in the IP-based network based on a second address information obtained from the trigger message; and connecting the first and second call legs to form a single connection.

A document of ETSI TS123 279 V7.6.0(2007-3) provides architectural details to combine CS services and IMS services for using them in parallel between the same two users in a peer-to-peer context. The document provides a detailed description of how capabilities and identities are exchanged to enable the combination of CS and IMS services between the same two UEs. The document includes the following capabilities that enable the combination of CS and IMS services: radio capability exchange, SIP based UE terminal capability exchange, MSISDN number exchange in SIP, establishing an IMS session in parallel to an ongoing CS call between the same two UEs, establishing a CS call in parallel to an ongoing IMS session between the same two users UEs, and network support for establishing multimedia sessions between a UE that uses IMS origination and a UE that uses CSI termination.
Another document of 3GPP TR 23.806 V7.0.0 (2005-12) relates to voice call continuity, VCC. Foregoing process is implemented when a UE transfers from the IMS domain to the CS domain, insuring the existing call in which the UE is engaged to continue without interruption. Moreover, D3 discloses a method to add a third UE after the UE completes the VCC process, in which the UE initiates another CS call and invites the third UE to be engaged in a call with the UE.

The related art could realize the communication between the CS networks and the IMS networks, which, however, encounters the following problems.

In the CS networks, a CS service control platform provides services for CS users, while in the PS networks, an IMS service control platform provides services for IMS users. The simultaneous operation of the service control platforms of the two networks greatly increases operation costs. Moreover, when introducing new services, it is necessary to implement configurations and updates in the CS service control platform and the IMS service control platform at the same time, which brings difficulties for the introduction of the new services.

### SUMMARY

Various embodiments of the present invention provide a call control method, a circuit-switched domain adapter and a terminal device to realize a call control to the circuit-switched terminal device by a packet-switched control platform.

Accordingly, an embodiment of the present invention provides a call control method, including: establishing a circuit-switched call leg with a terminal device; establishing a packet-switched call leg with a second party; establishing a call connection between the terminal device and the second party through binding the circuit-switched call leg and the packet-switched call leg with the second party; receiving a call request transmitted by a third party to the terminal device through a packet-switched domain server; delivering the call request of the third party to the terminal device; holding the packet-switched call leg with the second party after receiving a reply transmitted by the terminal device; establishing a packet-switched call leg with the third party under the control of the packet-switched domain server; and establishing a call connection between the terminal device and the third party through binding the circuit-switched call leg and the packet-switched call leg with the third party. The packet-switched call leg with the second party is established between a circuit-switched domain adapter and the second party under the control of the packet-switched domain server.

It can be seen from the above technical solutions that the embodiments of the present invention realize a call control to a circuit-switched terminal device by a packet-switched control platform through establishing a circuit-switched call leg with a terminal device, and establishing a packet-switched call connection between the terminal device and a second party under the control of a packet-switched domain server. Call control functions of a circuit-switched network are abandoned and a call control service is provided for the circuit-switched domain terminal device by the packet-switched domain server, thus centralizing control functions of the whole network, reducing network operation costs and making introduction of new services easier.

### BRIEF DESCRIPTION OF THE DRAWINGS

Fig. 1 is a flowchart of a call control method according to a first embodiment of the present invention;

Fig. 2 is a flowchart of a call control method according to a second embodiment of the present invention;

Fig. 3 is a flowchart of a call control method according to a third embodiment of the present invention;

Fig. 4 is a flowchart of a call control method according to a fourth embodiment of the present invention;

Fig. 5 is a flowchart of a call control method according to a fifth embodiment of the present invention;

Fig. 6 is a flowchart of a call control method according to a sixth embodiment of the present invention;

Fig. 7 is a flowchart of a call control method according to a seventh embodiment of the present invention;

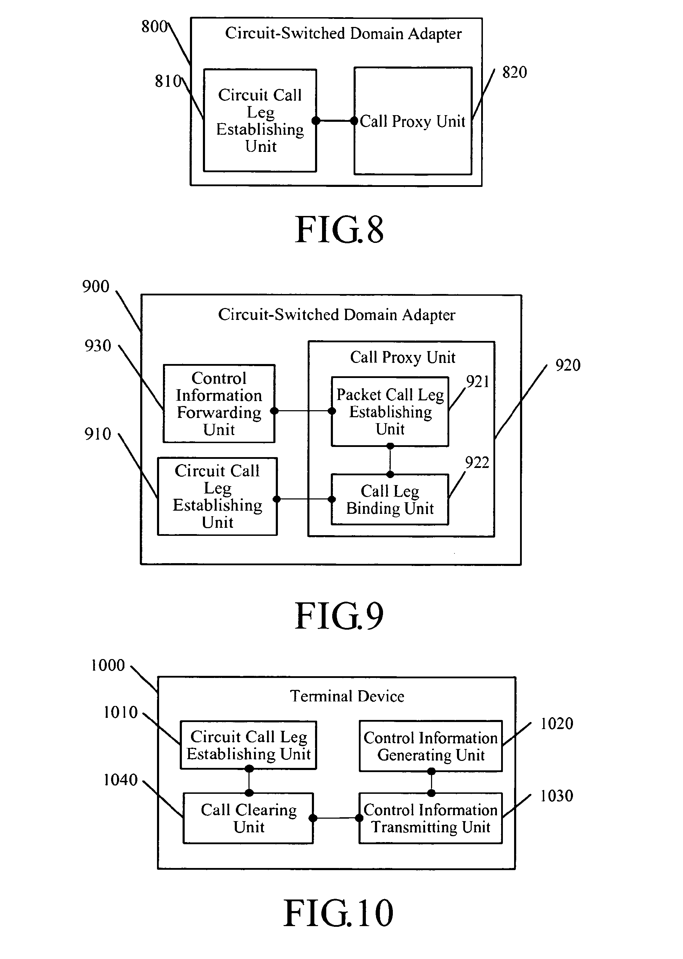

Fig. 8 is a schematic diagram of the logic structure of a circuit-switched domain adapter according to an eighth embodiment of the present invention;

Fig. 9 is a schematic diagram of the logic structure of a circuit-switched domain adapter according to a ninth embodiment of the present invention; and

Fig. 10 is a schematic diagram of the logic structure of a terminal device according to a tenth embodiment of the present invention.

### DETAILED DESCRIPTION

A call control method, a circuit-switched domain adapter and a terminal device proposed in the embodiments of the present invention will be described in detail as below.

### The First Embodiment

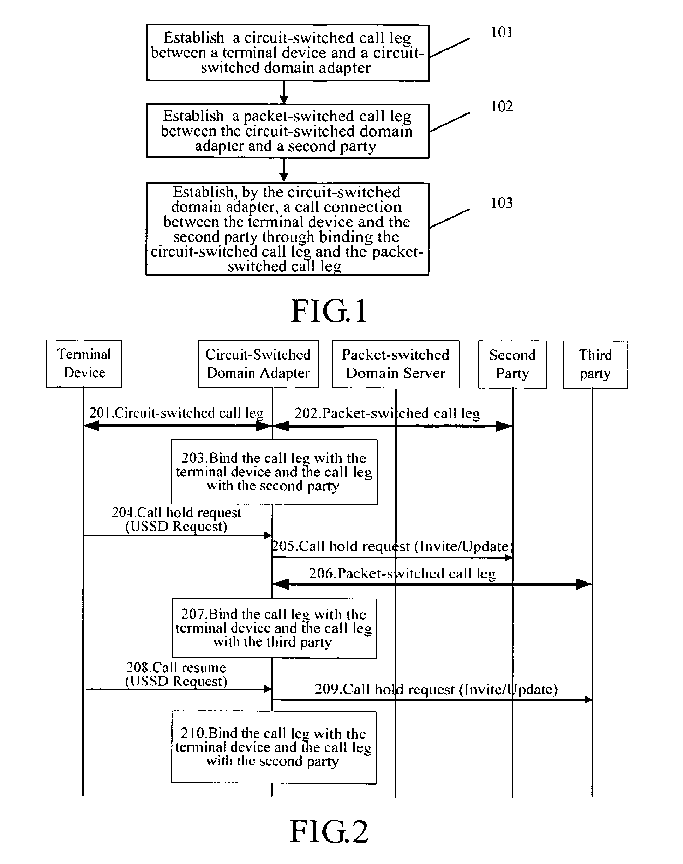

A flowchart of a call control method is shown in Fig. 1, which includes the following steps.

In step 101, a circuit-switched call leg (CS Call Leg) is established between a terminal device and a circuit-switched domain adapter (CSA).

It would be appreciated that the terminal device may be a network device for implementing circuit-switched communication, such as a mobile phone, a fixed-line phone, a network computer, a server and so on.

In step 102, a packet-switched call leg is established between the circuit-switched domain adapter and a second party.

In step 103, the circuit-switched domain adapter establishes a call connection between the terminal device and the second party through binding the circuit-switched call leg and the packet-switched call leg.

Steps 102 and 103 may be understood as that a packet-switched call connection is established between the circuit-switched domain adapter, as a proxy for the terminal device, and the second party under the control of a packet-switched domain server.

It would be appreciated that the packet-switched domain server is a functional entity for implementing call control in a packet-switched network, which may be a Telephone Application Server (TAS), a Call Server Control Function (CSCF) server and so on.

It would be appreciated that the packet-switched domain server may be a functional entity for implementing call control in an IMS network.

In the present embodiment, the circuit-switched domain adapter establishes the packet-switched call leg with the second party under the control of the packet-switched domain server.

It would be appreciated that the circuit-switched domain adapter, as the proxy in the PS network for the terminal device, establishes a call with the second party, and the packet-switched domain server provides a call control service for a user through the proxy of the circuit-switched domain adapter.

The first embodiment of the present invention realizes a call control to the circuit-switched terminal device by a packet-switched control platform through establishing, the circuit-switched call leg between the terminal device and the circuit-switched domain adapter, and establishing the packet-switched call connection between the circuit-switched domain adapter which operates as the proxy of the terminal device and the second party under the control of the packet-switched domain server. Call control functions of a circuit-switched network are abandoned and the call control service is provided for the circuit-switched domain terminal device by the packet-switched domain server, thus centralizing control functions of the whole network, reducing network operation costs and making introduction of new services easier.

### The Second Embodiment

A signaling flowchart of a call control method is shown in Fig. 2, which includes the following steps.

In step 201, a circuit-switched call leg is established between a terminal device and a circuit-switched domain adapter.

In step 202, a packet-switched call leg is established between the circuit-switched domain adapter and a second party under the control of a packet-switched domain server.

It would be appreciated that the packet network involved in the embodiment of the present invention may be an IMS network in which the packet-switched call employs Session Initial Protocol (SIP) and the packet-switched call leg is a SIP call leg.

In step 203, the circuit-switched domain adapter establishes a call connection between the terminal device and the second party through binding the circuit-switched call leg and the packet-switched call leg.

In step 204, the terminal device transmits a call hold request containing an identification of a third party to the circuit-switched domain adapter through a circuit-switched network.

The identification of the third party may be the third party's SIP Uniform Resource Identifier (URI), Telephone URI (Tel URI), Internet Protocol (IP) address, telephone number or other identification information that may identify a user. The present invention is not limited by specific identification information.

In the present embodiment, the call hold request may be carried in an Unstructured Supplementary Service Data Request (USSD request) message transmitted to the circuit-switched domain adapter through the circuit-switched network.

It would be appreciated that the terminal device may also have PS access capability and the call hold request may also be transmitted to the circuit-switched domain adapter through a packet-switched access network. For example, the terminal device may transmit the call hold request to the circuit-switched domain adapter through existing General Packet Radio Service (GPRS) network, and the call hold request may be transmitted through an Invite or Update message.

In step 205, the circuit-switched domain adapter transmits the call hold request to the second party through the packet-switched domain server so as to hold the established call leg with the second party.

It would be appreciated that the two parties in the communication may transmit a call hold request to each other, and they would hold the current call after one another party agrees to hold.

It would be appreciated that the call hold request transmitted by the circuit-switched domain adapter to the second party may be carried in the Invite message or the Update message. The Invite message or Update message contains an identification instructing the second party to hold the established call leg with the circuit-switched domain adapter, and meanwhile, the packet-switched domain server may play a call hold tone for the second party to notify the user of the second party that the call is held. The hold operation means that a hold accepting party holds a call status with a hold request transmitting party but stops data transmission. In the present embodiment, the hold accepting party is the user terminal of the second party, and the hold request transmitting party is the circuit-switched domain adapter.

In step 206, a packet-switched call leg is established between the circuit-switched domain adapter and the third party under the control of the packet-switched domain server.

In step 207, the circuit-switched domain adapter establishes a call connection between the terminal device and the third party through binding the circuit-switched call leg and the call leg with the third party.

It would be appreciated that the following steps may be further included by the method after step 207.

In step 208, the terminal device may also request a call resume with the second party from the circuit-switched domain adapter.

The terminal device transmits a call resume request with the second party to the circuit-switched domain adapter through a packet-switched access network or a circuit-switched network.

In step 209, the circuit-switched domain adapter requests the third party to hold the established call leg with the third party.

The manner of holding the established call leg with the third party is identical with the manner of holding the established call leg with the second party in step 205.

In step 210, the circuit-switched domain adapter resumes the call connection between the terminal device and the second party through binding the established call leg with the terminal device and the established call leg with the second party.

It would be appreciated that in the present embodiment, the terminal device may continue to request a call resume from the circuit-switched domain adapter so as to realize the communication switching of the terminal device between the second party and the third party.

On the basis of the first embodiment, the second embodiment of the present invention realizes that a packet-switched network service platform provides a call hold service for the circuit-switched network terminal device. Through reusing the circuit-switched call leg between the circuit-switched domain adapter and the terminal device, the implementation of the procedure of the call hold service becomes easier, thus saving CS network resources and decreasing the establishing time of a call connection.

### The Third Embodiment

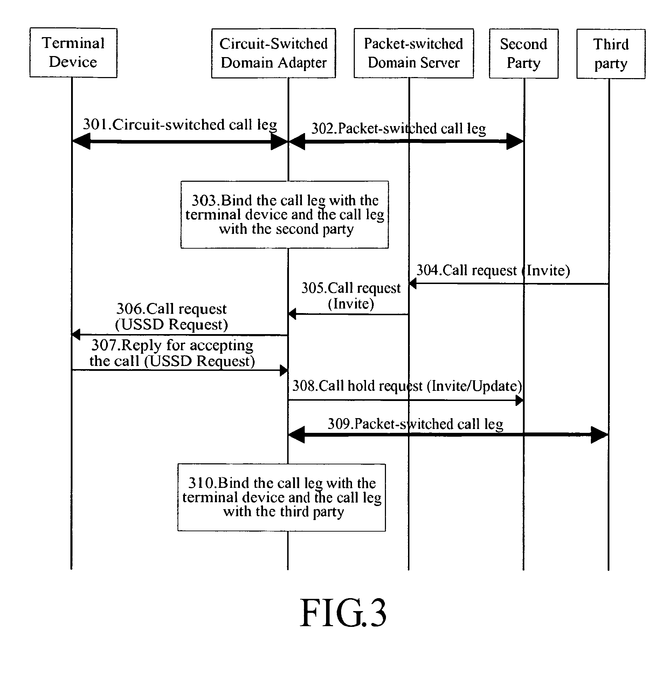

A signaling flowchart of a call control method is shown in Fig. 3, which includes the following steps.

In step 301, a circuit-switched call leg is established between a terminal device and a circuit-switched domain adapter.

In step 302, a packet-switched call leg is established between the circuit-switched domain adapter and a second party under the control of a packet-switched domain server.

In step 303, the circuit-switched domain adapter establishes a call connection between the terminal device and the second party through binding the established call leg with the terminal device and the established call leg with the second party.

In step 304, a third party transmits a call request intended for the terminal device to the packet-switched domain server.

In the present embodiment, the call request is an Invite message which contains an identification of the terminal device.

In step 305, the packet-switched domain server transmits the call request to the circuit-switched domain adapter.

It would be appreciated that the packet-switched domain server receives the call request and performs an initial Filter Criteria (iFC) check. If it is checked that the call request is intended for the circuit-switched domain terminal device, that is, the call is to be established through a circuit-switched network, the packet-switched domain server routes the call request to the circuit-switched domain adapter.

The iFC is a part of user subscribing information, which is service trigger information. The iFC is used to describe under what conditions an incoming SIP message is further routed to a specific application server. Typically, the SIP message may be an Invite message requesting to establish a call or a Register message for IMS registration.

In step 306, the circuit-switched domain adapter delivers the call request of the third party to the terminal device.

In the present embodiment, the delivered call request may be delivered to the terminal device through a circuit-switched network USSD Request message, and may also be delivered to the terminal device through a packet-switched access network.

In step 307, the terminal device transmits a reply for accepting the call to the circuit-switched domain adapter.

In the present embodiment, the reply may be transmitted to the circuit-switched domain adapter through a circuit-switched network USSD Request message, and may also be transmitted to the circuit-switched domain adapter through the packet-switched access network.

In step 308, the circuit-switched domain adapter receives the reply and transmits a call hold request to the second party to hold the established call leg with the second party.

The manner of holding the established call leg with the second party may be referred to step 205 in the second embodiment.

In step 309, a packet-switched call leg is established between the circuit-switched domain adapter and the third party under the control of the packet-switched domain server.

In step 310, the circuit-switched domain adapter establishes a call connection between the terminal device and the third party through binding the established call leg with the terminal device and the established call leg with the third party.

It would be appreciated that after step 310, the terminal device may request a call resume from the circuit-switched domain adapter so as to realize the communication switching of the terminal device between the second party and the third party. Specific switching manner may be referred to steps 208 to 210 in the second embodiment.

It would be appreciated that the order between step 309 and steps 305 to 308 is not limited. It is also possible that after step 304 in which the circuit-switched domain adapter receives the call request of the third party, step 309 is performed, in which the packet-switched call leg is established between the circuit-switched domain adapter and the third party under the control of the packet-switched domain server. If the terminal device returns the reply for accepting the call of the third party in step 307, the process proceeds to step 308. If the terminal device rejects to communicate with the third party, the circuit-switched domain adapter may clear the established call leg with the third party in subsequent steps.

The third embodiment of the present invention differs from the second embodiment in that the terminal device receives the call request of the third party during the communication with the second party, and if the terminal device accepts the call request, it holds the call connection with the second party and establishes the call connection with the third party. Through reusing the circuit-switched call leg, it is realized that a packet-switched platform provides a call waiting service for the circuit-switched terminal device.

### The Fourth Embodiment

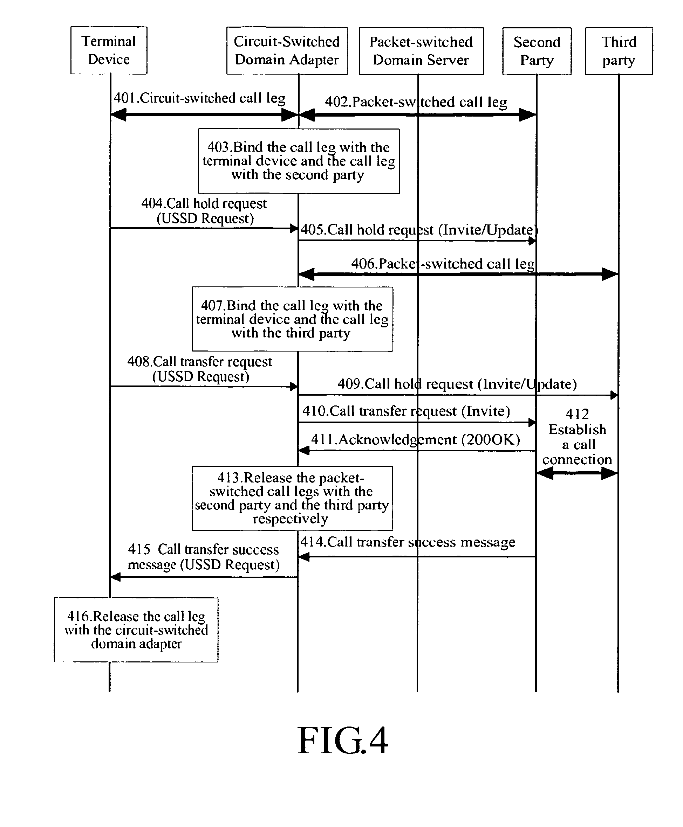

A signaling flowchart of a call control method is shown in Fig. 4, which includes the following steps.

Steps 401 to 407 in the present embodiment are identical with steps 201 to 207 in the second embodiment described above and thus are not further described here.

In step 408, the terminal device transmits a call transfer request to the circuit-switched domain adapter.

The terminal device may transmit the call transfer request to the circuit-switched domain adapter through a packet-switched access network or a circuit-switched network.

In step 409, the circuit-switched domain adapter transmits a call hold request to the third party to hold the established call leg with the third party.

In step 410, the circuit-switched domain adapter transmits the call transfer request to the second party, in which the call transfer request contains an identification of the third party.

The call transfer request may be transmitted through an Invite message.

In step 411, the second party accepts the call transfer request and returns an acknowledge message to the circuit-switched domain adapter.

The acknowledge message may be returned through a 200OK message.

In step 412, the second party and the third party establish a call connection.

Specifically, the second party and the third party may use conventional existing manners to establish the call connection, which are not further described in the present embodiment.

Steps 410 to 412 are a specific implementation for the circuit-switched domain adapter to control the second party and the third party to establish the call connection. It would be appreciated that the circuit-switched domain adapter may also realize the establishment of the call connection between the second party and the third party through binding the established call legs between the circuit-switched domain adapter and the second or third party. The present invention is not limited by specific manners of establishing the call connection between the second party and the third party.

After step 411, the established packet-switched call legs between the circuit-switched domain adapter and the second or third party respectively are released in step 413.

In step 414, after the call connection between the second party and the third party is established successfully, the second party returns a call transfer success message to the circuit-switched domain adapter.

In step 415, the circuit-switched domain adapter transmits a USSD Request message to the terminal device through a circuit-switched network, in which the USSD Request message contains an identification indicating that the call transfer is successful.

It would be appreciated that the circuit-switched domain adapter may also notify the terminal device of the call transfer success message through a packet-switched network.

In step 416, the terminal device releases the established call leg with the circuit-switched domain adapter after receiving the call transfer success message.

It would be appreciated that steps 401 to 407 in the present embodiment may be replaced with steps 301 to 310 in the third embodiment.

On the basis of the method of the second or third embodiment, the fourth embodiment of the present invention realizes a method for a packet-switched control platform to provide a call transfer service for the circuit-switched terminal device.

### The Fifth Embodiment

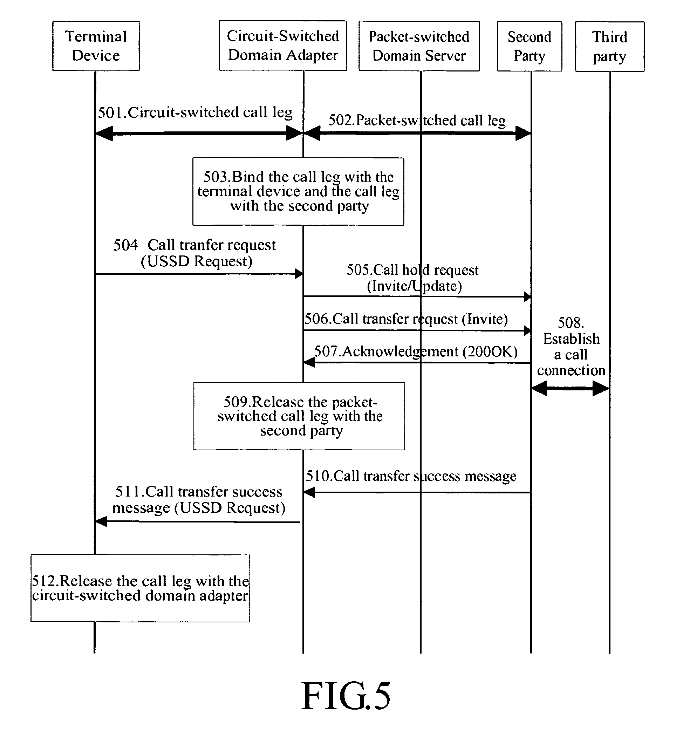

A signaling flowchart of a call control method is shown in Fig. 5, which includes the following steps.

In step 501, a circuit-switched call leg is established between a terminal device and a circuit-switched domain adapter.

In step 502, a packet-switched call leg is established between the circuit-switched domain adapter and the second party under the control of a packet-switched domain server.

In step 503, the circuit-switched domain adapter establishes a call connection between the terminal device and the second party through binding the established call leg with the terminal device and the established call leg with the second party.

In step 504, the terminal device transmits a call transfer request to the circuit-switched domain adapter, in which the call transfer request includes an identification of a third party.

The terminal device may transmit the call transfer request to the circuit-switched domain adapter through a packet-switched access network or a circuit-switched network.

In step 505, the circuit-switched domain adapter transmits a call hold request to the second party to hold the established call leg with the second party.

Steps 506 to 508 are steps in which the circuit-switched domain adapter controls the second party and the third party to establish a call connection, which are identical with steps 410 to 412 in the fourth embodiment and thus are not further described here.

In step 509, after the second party returns an acknowledge message for accepting the call transfer, the circuit-switched domain adapter releases the established packet-switched call leg with the second party.

In step 510, after the call connection between the second party and the third party is established successfully, the second party returns a call transfer success message to the circuit-switched domain adapter.

In step 511, the circuit-switched domain adapter transmits the call transfer success message to the terminal device through the circuit-switched network. The call transfer success message may be transmitted through a USSD Request message which contains an identification indicating that the call transfer is successful.

It would be appreciated that the circuit-switched domain adapter may also notify the terminal device of the call transfer success message through the packet-switched network.

In step 512, the terminal device releases the established circuit-switched call leg with the circuit-switched domain adapter after receiving the call transfer success message.

The fifth embodiment of the present invention differs from the fourth embodiment in that: the circuit-switched domain adapter does not establish a call leg with the third party; the terminal device directly transmits the call transfer request and notifies the circuit-switched domain adapter of the identification of the third party to be transferred to; and the second party establishes the call connection with the third party so as to realize the call transfer.

### The Sixth Embodiment

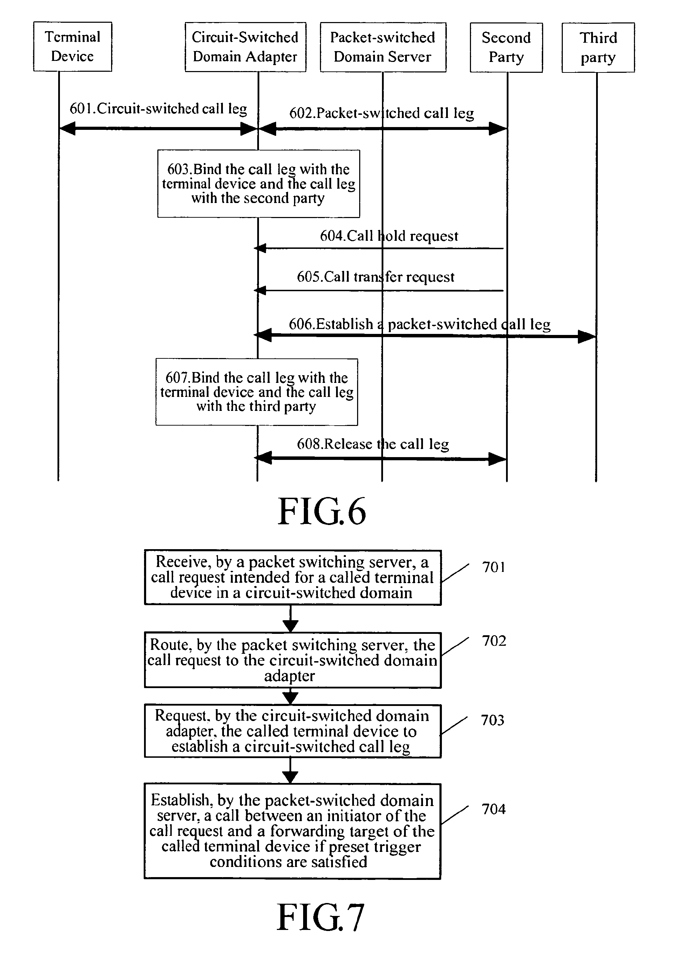

A signaling flowchart of a call control method is shown in Fig. 6, which includes the following steps.

In step 601, a circuit-switched call leg is established between a terminal device and a circuit-switched domain adapter.

In step 602, a packet-switched call leg is established between the circuit-switched domain adapter and a second party under the control of a packet-switched domain server.

In step 603, the circuit-switched domain adapter establishes a call connection between the terminal device and the second party through binding the established call leg with the terminal device and the established call leg with the second party.

In step 604, the second party transmits a call hold request to the circuit-switched domain adapter to hold the established call leg with the circuit-switched domain adapter.

In step 605, the second party transmits a call transfer request to the circuit-switched domain adapter, in which the call transfer request contains an identification of a third party.

In step 606, a packet-switched call leg is established between the circuit-switched domain adapter and the third party under the control of the packet-switched domain server.

In step 607, the circuit-switched domain adapter establishes a call connection between the terminal device and the third party through binding the established call leg with the terminal device and the established call leg with the third party.

In step 608, the circuit-switched domain adapter interacts with the second party to release the established call leg with the second party.

In the sixth embodiment of the present invention, the call transfer request is initiated by the second party, the terminal device establishes the call connection with the third party, and the second party exits the call. It is realized that a packet-switched platform provides a passive call transfer service for the circuit-switched network terminal device.

### The Seventh Embodiment

A signaling flowchart of a call control method is shown in Fig. 7, which includes the following steps.

In step 701, a packet-switched domain server receives a call request intended for a called terminal device in a circuit-switched domain.

It would be appreciated that the packet-switched domain server performs an iFC check after receiving the call request. If it is checked that the call request is intended for the circuit-switched domain terminal device, the packet-switched domain server routes the call request to a circuit-switched domain adapter.

In step 702, the packet-switched domain server routes the call request to the circuit-switched domain adapter.

In step 703, the circuit-switched domain adapter requests the called terminal device to establish a circuit-switched call leg.

Specifically, requesting to establish the circuit-switched call leg may include: transmitting, by the circuit-switched domain adapter, an Invite message to a media gateway controller; transmitting, by the media gateway controller, an Initial Address Message (IAM) to a Mobile Switching Center (MSC) that provides services for the called terminal device; and transmitting, by the MSC, a call setup message to the called terminal device.

It would be appreciated that the circuit-switched domain adapter may transmit the calling party's call request to the called terminal device through a circuit-switched network, during which various implementations are possible for specific transmitted messages and message transmission paths. The present invention is not limited by specific transmitted messages and message transmission paths.

In step 704, if preset trigger conditions are satisfied, the packet-switched domain server establishes a call between an initiator of the call request and a forwarding target of the called terminal device.

In the embodiment of the present invention, the preset trigger conditions may include any one of or any combination of the following four conditions.

**I.** The packet-switched domain server receives a message, indicating that the called terminal device is busy, returned by the called terminal device through the circuit-switched domain adapter.

It would be appreciated that the fact that the called user terminal device is busy may means that: after the called terminal device receives the call establishing request, the user rejects the communication through certain operations and returns the message indicating that the called terminal device is busy; or after the MSC receives the call request, the MSC detects that the called terminal device is being in communication and then directly returns the message indicating that the called terminal device is busy.

**II.** The packet-switched domain server receives a forwarding request message returned by the called terminal device through the circuit-switched domain adapter, in which the forwarding request message contains an identification of the forwarding target.

The user may transmit the request for forwarding the current call to the packet-switched domain server through the called terminal, and the packet-switched domain server may perform the operation of forwarding according to the forwarding target specified by the called terminal device.

**III**. The circuit switching server fails to receive a temporary response message, for the call request, returned by the called terminal device through the circuit-switched domain adapter in a preset period, that is, the circuit switching server can not communicate with the called terminal device.

**IV.** The circuit switching server fails to receive a reply message, for accepting the call, returned by the called terminal device through the circuit-switched domain adapter in a preset period.

Four trigger conditions for call forwarding are provided above. It would be appreciated that the trigger conditions for call forwarding may be appropriately set according to specific circumstances and service implementations, and the present invention is not limited by specific trigger conditions.

The seventh embodiment of the present invention realizes that a packet-switched network platform provides a forwarding service for the circuit-switched network called terminal device. During the process of evolving from the circuit-switched network to the packet-switched network, network building costs are reduced and network resources are saved through centrally controlling the forwarding service by the packet-switched network.

### The Eighth Embodiment

A circuit-switched domain adapter 800 includes a circuit call leg establishing unit 810 and a call proxy unit 820.

The circuit call leg establishing unit 810 is configured to establish a circuit-switched call leg with a terminal device.

The call proxy unit 820 is configured to establish a packet-switched call connection with the opposite end of the terminal device under the control of a packet-switched domain server.

The opposite end may be the second party or the third party described in the first to seventh embodiments, specifically may be a communication device communicating with the terminal device, such as a mobile phone, a computer, a server and so on.

### The Ninth Embodiment

A circuit-switched domain adapter 900 includes a circuit call leg establishing unit 910 and a call proxy unit 920. Preferably, the circuit-switched domain adapter 900 may also include a control information forwarding unit 930. The call proxy unit 920 includes a packet call leg establishing unit 921 and a call leg binding unit 922.

The circuit call leg establishing unit 910 is configured to establish a circuit-switched call leg with a terminal device. The call proxy unit 920 is configured to, as a proxy of the terminal device, establish a packet-switched call connection with a second party in a packet-switched domain.

The packet call leg establishing unit 921 is configured to establish a packet-switched call leg with the second party under the control of a packet-switched domain server.

The call leg binding unit 922 is configured to establish a call connection between the terminal device and the second party through binding the call leg established with the terminal device and the call leg established with the opposite end.

The control information forwarding unit 930 is configured to receive control information of the terminal device and forward the control information of the terminal device to the second party through the packet-switched call leg established by the packet call leg establishing unit 921.

Specific implementations of the functions of the units in the circuit-switched domain adapter 900 may be referred to the implementation process of corresponding steps in the above-mentioned methods and thus are not further described here.

### The Tenth Embodiment

A terminal device 1000 includes a circuit call leg establishing unit 1010, a control information generating unit 1020, a control information transmitting unit 1030 and a call clearing unit 1040.

The circuit call leg establishing unit 1010 is configured to establish a circuit-switched call leg with a circuit-switched domain adapter.

The control information generating unit 1020 is configured to generate call control information intended for the circuit-switched domain adapter after the circuit-switched call leg is established.

The control information transmitting unit 1030 is configured to transmit the call control information generated by the control information generating unit 1020 to the circuit-switched domain adapter through a packet-switched access network or a circuit-switched network.

The call clearing unit 1040 is configured to receive a call clearing request of the circuit-switched domain adapter and clear the circuit-switched call leg established by the circuit call leg establishing unit 1010.

Specific implementations of the functions of the units in the above-mentioned device may be referred to the implementation process of corresponding steps in the above-mentioned methods and thus are not further described here.

Detail description has been given above with respect to the call control method, circuit-switched domain adapter and terminal device proposed by the embodiments of the present invention.

The embodiments of the present invention realize a call control to a circuit-switched terminal device by a packet-switched control platform through establishing a circuit-switched call leg between the terminal device and a circuit-switched domain adapter, and establishing a packet-switched call connection between the circuit-switched domain adapter, which operates as a proxy of the terminal device, and a second party under the control of a packet-switched domain server. Call control functions of a circuit-switched network are abandoned and a call control service is provided for the circuit-switched domain terminal device by the packet-switched domain server, thus centralizing control functions of the whole network, reducing network operation costs and making introduction of new services easier.

Further, the present invention realizes that a packet-switched network service platform provides supplementary services, such as call hold, call waiting and call transfer, for a circuit-switched network terminal device. Through reusing a circuit-switched call leg between a circuit-switched domain adapter and the terminal device, the implementation of a second call connection becomes easier, thus saving CS network resources and decreasing the establishing time of a call connection.

Meanwhile, the embodiments of the present invention realize that a packet-switched network platform provides a forwarding service for a circuit-switched network called terminal device. During the process of evolving from a circuit-switched network to a packet-switched network, network building costs and network resources are saved through centrally controlling the forwarding service by the packet-switched network.

The principle and implementations of the present invention are set forth with reference to specific examples. The description of the above embodiments is only for facilitating to understand the methods and gist of the present invention. Meanwhile, for those skilled in the art, modifications in specific implementations and application scopes are possible in light of the principle of the present invention. In summary, the description should not be construed as limiting the present invention.

## Claims

1. A call control method, comprising:
establishing a circuit-switched call leg with a terminal device;
establishing a packet-switched call leg with a second party;
establishing a call connection between the terminal device and the second party through binding the circuit-switched call leg and the packet-switched call leg with the second party;
receiving a call request transmitted by a third party to the terminal device through a packet-switched domain server;
delivering the call request of the third party to the terminal device;
holding the packet-switched call leg with the second party after receiving a reply transmitted by the terminal device;
establishing a packet-switched call leg with the third party under the control of the packet-switched domain server; and
establishing a call connection between the terminal device and the third party through binding the circuit-switched call leg and the packet-switched call leg with the third party;
wherein the packet-switched call leg with the second party is established between a circuit-switched domain adapter and the second party under the control of the packet-switched domain server.

2. The call control method according to claim 1, wherein the packet-switched call leg with the third party is established between a circuit-switched domain adapter and the third party under the control of the packet-switched domain server.

3. The call control method according to claim 1, wherein receiving a call request transmitted by the third party to the terminal device through a packet-switched domain server comprise:
receiving, by a packet-switched domain server, a call request transmitted by a third party;
receiving, by a circuit-switched domain adapter, the call request transmitted by the packet-switched domain server.

4. The call control method according to claim 1, wherein delivering the call request to the terminal device comprises:
the call request is delivered by a circuit-switched domain adapter to the terminal device through a circuit-switched network USSD Request message, or
the call request is delivered by the circuit-switched domain adapter to the terminal device through a packet-switched access network.

5. The call control method according to claim 1, wherein after delivering the call request to the terminal device, the method further comprises:
receiving, by the circuit-switched domain adapter, a reply for accepting the call transmitted by the terminal device.

6. The call control method according to claim 5, wherein:
the reply is transmitted to the circuit-switched domain adapter through a circuit-switched network USSD Request message or a packet-switched access network.

7. The call control method according to claim 1, wherein holding the packet-switched call leg with the second party comprises:
transmitting, by a circuit-switched domain adapter, a call hold request to the second party to hold the packet-switched call leg with the second party.

8. The call control method according to claim 1, wherein the call request is intended for the terminal device.

9. The call control method according to any one of claims 1 to 8, further comprising:
receiving a call resume request transmitted by the terminal device;
holding the packet-switched call leg with the third party; and
resuming the call connection between the terminal device and the second party through binding the circuit-switched call leg and the packet-switched call leg with the second party.

10. The call control method according to any one of claims 1 to 8, wherein the method further comprises:
receiving a call transfer request containing an identification of the third party transmitted by the terminal device;
transmitting the call transfer request to the second party;
controlling the second party and the third party to establish a call connection; and
releasing the packet-switched call leg and the circuit-switched call leg.

## Patentansprüche

1. Anrufsteuerverfahren, umfassend:
Herstellen eines leitungsvermittelten Anrufzweigs mit einer Endgeräteeinrichtung;
Herstellen eines paketvermittelten Anrufzweigs mit einem zweiten Teilnehmer;
Herstellen einer Anrufverbindung zwischen der Endgeräteeinrichtung und dem zweiten Teilnehmer durch Binden des leitungsvermittelten Anrufzweigs und des paketvermittelten Anrufzweigs mit dem zweiten Teilnehmer;
Empfangen einer Anrufanforderung, die durch einen dritten Teilnehmer durch einen Server der paketvermittelten Domäne zu der Endgeräteeinrichtung gesendet wird;
Abliefern der Anrufanforderung des dritten Teilnehmers an die Endgeräteeinrichtung;
Halten des paketvermittelten Anrufzweigs mit dem zweiten Teilnehmer nach dem Empfang einer durch die Endgeräteeinrichtung gesendeten Antwort;
Herstellen eines paketvermittelten Anrufzweigs mit dem dritten Teilnehmer unter der Kontrolle des Servers der paketvermittelten Domäne; und
Herstellen einer Anrufverbindung zwischen der Endgeräteeinrichtung und dem dritten Teilnehmer durch Binden des leitungsvermittelten Anrufzweigs und des paketvermittelten Anrufzweigs mit dem dritten Teilnehmer;
wobei der paketvermittelte Anrufzweig mit dem zweiten Teilnehmer zwischen einem Adapter der leitungsvermittelten Domäne und dem zweiten Teilnehmer unter der Kontrolle des Servers der paketvermittelten Domäne hergestellt wird.

2. Anrufsteuerverfahren nach Anspruch 1, wobei der paketvermittelte Anrufzweig mit dem dritten Teilnehmer zwischen einem Adapter der leitungsvermittelten Domäne und dem dritten Teilnehmer unter der Kontrolle des Servers der paketvermittelten Domäne hergestellt wird.

3. Anrufsteuerverfahren nach Anspruch 1, wobei das Empfangen einer Anrufanforderung, die durch den dritten Teilnehmer durch einen Server der paketvermittelten Domäne zu der Endgeräteeinrichtung gesendet wird, Folgendes umfasst:
Empfangen einer durch einen dritten Teilnehmer gesendeten Anrufanforderung durch einen Server der paketvermittelten Domäne;
Empfangen der durch den Server der paketvermittelten Domäne gesendeten Anrufanforderung durch einen Adapter der leitungsvermittelten Domäne.

4. Anrufsteuerverfahren nach Anspruch 1, wobei das Abliefern der Anrufanforderung an die Endgeräteeinrichtung Folgendes umfasst:
die Anrufanforderung wird durch einen Adapter der leitungsvermittelten Domäne durch eine Nachricht USSD-Request des leitungsvermittelten Netzes an die Endgeräteeinrichtung abgeliefert, oder
die Anrufanforderung wird durch den Adapter der leitungsvermittelten Domäne durch ein paketvermitteltes Zugangsnetz an die Endgeräteeinrichtung abgeliefert.

5. Anrufsteuerverfahren nach Anspruch 1, wobei das Verfahren nach dem Abliefern der Anrufanforderung an die Endgeräteeinrichtung ferner Folgendes umfasst:
Empfangen einer Antwort durch den Adapter der leitungsvermittelten Domäne zum Annehmen des durch die Endgeräteeinrichtung gesendeten Anrufs.

6. Anrufsteuerverfahren nach Anspruch 5, wobei
die Antwort durch eine Nachricht USSD-Request des leitungsvermittelten Netzes oder ein paketvermitteltes Zugangsnetz zu dem Adapter der leitungsvermittelten Domäne gesendet wird.

7. Anrufsteuerverfahren nach Anspruch 1, wobei das Halten des paketvermittelten Anrufzweigs mit dem zweiten Teilnehmer Folgendes umfasst:
Senden einer Anrufhalteanforderung durch einen Adapter der leitungsvermittelten Domäne zu dem zweiten Teilnehmer, um den paketvermittelten Anrufzweig mit dem zweiten Teilnehmer zu halten.

8. Anrufsteuerverfahren nach Anspruch 1, wobei die Anrufanforderung für die Endgeräteeinrichtung bestimmt ist.

9. Anrufsteuerverfahren nach einem der Ansprüche 1 bis 8, ferner umfassend:
Empfangen einer durch die Endgeräteeinrichtung gesendeten Anrufwiederaufnahmeanforderung;
Halten des paketvermittelten Anrufzweigs mit dem dritten Teilnehmer; und
Wiederaufnehmen der Anrufverbindung zwischen der Endgeräteeinrichtung und dem zweiten Teilnehmer durch Binden des leitungsvermittelten Anrufzweigs und des paketvermittelten Anrufzweigs mit dem zweiten Teilnehmer.

10. Anrufsteuerverfahren nach einem der Ansprüche 1 bis 8, wobei das Verfahren ferner Folgendes umfasst:
Empfangen einer Anruftransferanforderung, die eine Identifikation des dritten Teilnehmers enthält, die durch die Endgeräteeinrichtung gesendet wird;
Senden der Anruftransferanforderung zu dem zweiten Teilnehmer;
Steuern des zweiten Teilnehmers und des dritten Teilnehmers dafür, eine Anrufverbindung herzustellen; und
Freigeben des paketvermittelten Anrufzweigs und des leitungsvermittelten Anrufzweigs.

## Revendications

1. Procédé de commande d'appel, comprenant :
l'établissement d'un tronçon d'appel commuté par circuits avec un dispositif terminal ;
l'établissement d'un tronçon d'appel commuté par paquets avec un deuxième correspondant ;
l'établissement d'une connexion d'appel entre le dispositif terminal et le deuxième correspondant en liant le tronçon d'appel commuté par circuits et le tronçon d'appel commuté par paquets avec le deuxième correspondant ;
la réception d'une requête d'appel transmise par un troisième correspondant au dispositif terminal par le biais d'un serveur de domaine à commutation par paquets ;
la délivrance de la requête d'appel du troisième correspondant au dispositif terminal ;
la mise en garde du tronçon d'appel commuté par paquets avec le deuxième correspondant après la réception d'une réponse transmise par le dispositif terminal ;
l'établissement d'un tronçon d'appel commuté par paquets avec le troisième correspondant sous la commande du serveur de domaine à commutation par paquets ; et
l'établissement d'une connexion d'appel entre le dispositif terminal et le troisième correspondant en liant le tronçon d'appel commuté par circuits et le tronçon d'appel commuté par paquets avec le troisième correspondant ;
dans lequel le tronçon d'appel commuté par paquets avec le deuxième correspondant est établi entre un adaptateur de domaine commuté par circuits et le deuxième correspondant sous la commande du serveur de domaine à commutation par paquets.

2. Procédé de commande d'appel selon la revendication 1, dans lequel le tronçon d'appel commuté par paquets avec le troisième correspondant est établi entre un adaptateur de domaine commuté par circuits et le troisième correspondant sous la commande du serveur de domaine à commutation par paquets.

3. Procédé de commande d'appel selon la revendication 1, dans lequel la réception d'une requête d'appel transmise par le troisième correspondant au dispositif terminal par le biais d'un serveur de domaine à commutation par paquets comprend :
la réception, par un serveur de domaine à commutation par paquets, d'une requête d'appel transmise par un troisième correspondant ;
la réception, par un adaptateur de domaine commuté par circuits, de la requête d'appel transmise par le serveur de domaine à commutation par paquets.

4. Procédé de commande d'appel selon la revendication 1, dans lequel la délivrance de la requête d'appel au dispositif terminal comprend :
la délivrance de la requête d'appel par un adaptateur de domaine commuté par circuits au dispositif terminal par le biais d'un message de Requête USSD de réseau à commutation par circuits, ou
la délivrance de la requête d'appel par l'adaptateur de domaine commuté par circuits au dispositif terminal par le biais d'un réseau d'accès à commutation par paquets.

5. Procédé de commande d'appel selon la revendication 1, comprenant en outre après la délivrance de la requête d'appel au dispositif terminal :
la réception, par l'adaptateur de domaine commuté par circuits, d'une réponse pour accepter l'appel transmis par le dispositif terminal.

6. Procédé de commande d'appel selon la revendication 5, dans lequel :
la réponse est transmise à l'adaptateur de domaine commuté par circuits par le biais d'un message de Requête USSD de réseau à commutation par circuits ou d'un réseau d'accès à commutation par paquets.

7. Procédé de commande d'appel selon la revendication 1, dans lequel la mise en garde du tronçon d'appel commuté par paquets avec le deuxième correspondant comprend :
la transmission, par un adaptateur de domaine commuté par circuits, d'une requête de mise en garde d'appel au deuxième correspondant afin de mettre en garde le tronçon d'appel commuté par paquets avec le deuxième correspondant.

8. Procédé de commande d'appel selon la revendication 1, dans lequel la requête d'appel est destinée au dispositif terminal.

9. Procédé de commande d'appel selon l'une quelconque des revendications 1 à 8, comprenant en outre :
la réception d'une requête de reprise d'appel transmise par le dispositif terminal ;
la mise en garde du tronçon d'appel commuté par paquets avec le troisième correspondant ; et
la reprise de la connexion d'appel entre le dispositif terminal et le deuxième correspondant en liant le tronçon d'appel commuté par circuits et le tronçon d'appel commuté par paquets avec le deuxième correspondant.

10. Procédé de commande d'appel selon l'une quelconque des revendications 1 à 8, comprenant en outre :
la réception d'une requête de transfert d'appel contenant une identification du troisième correspondant transmise par le dispositif terminal ;
la transmission de la requête de transfert d'appel au deuxième correspondant ;
la commande du deuxième correspondant et du troisième correspondant afin d'établir une connexion d'appel ; et
la libération du tronçon d'appel commuté par paquets et du tronçon d'appel commuté par circuits.
